(19)

Europäisches
Patentamt

European
Patent Office

Office européen
des brevets

(11) **EP 4 194 403 A1**

(12) **EUROPEAN PATENT APPLICATION**
published in accordance with Art. 153(4) EPC

(43) Date of publication:
**14.06.2023 Bulletin 2023/24**

(21) Application number: **21852586.3**

(22) Date of filing: **06.08.2021**

(51) International Patent Classification (IPC):
*C01B 39/48* (2006.01)    *B01J 37/02* (2006.01)
*B01J 37/10* (2006.01)    *B01D 53/86* (2006.01)
*B01D 53/94* (2006.01)    *B01J 29/76* (2006.01)

(52) Cooperative Patent Classification (CPC):
**B01D 53/86; B01D 53/94; B01J 29/76; B01J 37/02;
B01J 37/10; C01B 39/48**

(86) International application number:
**PCT/JP2021/029284**

(87) International publication number:
**WO 2022/030617 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2020 JP 2020134632**

(71) Applicant: **Tosoh Corporation
Yamaguchi 746-8501 (JP)**

(72) Inventors:
• **MITSUHASHI, Ryo**
  **Shunan-shi Yamaguchi 746-8501 (JP)**
• **KAWAMOTO, Takuya**
  **Shunan-shi Yamaguchi 746-8501 (JP)**
• **AOYAMA, Hidekazu**
  **Shunan-shi Yamaguchi 746-8501 (JP)**
• **CHEN, Ning**
  **Shunan-shi Yamaguchi 746-8501 (JP)**

(74) Representative: **Müller-Boré & Partner
Patentanwälte PartG mbB
Friedenheimer Brücke 21
80639 München (DE)**

(54) **CHA-TYPE ZEOLITE AND METHOD FOR PRODUCING SAME**

(57)    Provided is at least one of an improvement in the thermal stability of a CHA-type zeolite, which is achieved by a method different from that of the related art for improving thermal stability; a method for producing a CHA-type zeolite that improves thermal stability; and such a CHA-type zeolite. Provided is a CHA-type zeolite having a $^1$H-MAS-NMR spectrum and an IR spectrum in which, preferably, in the $^1$H-MAS-NMR spectrum, a ratio of an integrated intensity of a maximum peak having a peak top at a chemical shift of 3.0 to 3.5 ppm to an integrated intensity of a maximum peak having a peak top at a chemical shift of 4.0 to 4.5 ppm is greater than 0.12 and 0.5 or less, and, in the IR spectrum, a ratio of a maximum peak height of an absorption peak having a peak top at a wavenumber of 3630 cm$^{-1}$ or greater and 3650 cm$^{-1}$ or less to a maximum peak height of an absorption peak having a peak top at a wavenumber of 3590 cm$^{-1}$ or greater and 3610 cm$^{-1}$ or less is 0.40 or greater and 1.0 or less.

**EP 4 194 403 A1**

**Description**

Technical Field

The present disclosure relates to a CHA-type zeolite.

Background Art

When CHA-type zeolites, such as SSZ-13 and SSZ-62, are exposed to a high-temperature and high-humidity atmosphere, their framework structures tend to collapse. Accordingly, to date, studies have been conducted for CHA-type zeolites having thermal stability sufficient for use in a nitrogen oxide reduction catalyst that performs selective catalytic reduction, that is, a so-called SCR catalyst.

For example, the following CHA-type zeolites are disclosed: a CHA-type zeolite having an average crystal size of 1.5 um or greater and a $SiO_2/Al_2O_3$ ratio of 15 or greater (Patent Literature 1); a CHA-type zeolite having a $SiO_2/Al_2O_3$ ratio of 15 or greater, a silanol group to silicon molar ratio of no more than $1.6 \times 10^{-2}$, an average crystal size of 0.5 um or greater and less than 1.5 um and a 50%-volume particle size to 10%-volume particle size of 3.2 or less (Patent Literature 2); and a CHA-type zeolite that has a chabazite framework, contains Si and Al, has a lattice constant of $\leq$ 13.74 Å and has a crystallinity of 140% $\leq$ (Patent Literature 3).

Citation List

Patent Literature

PTL 1: U.S. Patent Application Publication No. 2011/0251048
PTL 2: Japanese Unexamined Patent Application Publication No. 2018-135261
PTL 3: Japanese Unexamined Patent Application Publication No. 2017-218367

Summary of Invention

Technical Problem

In the related art, studies have been conducted on improving thermal stability by, for example, controlling a particle size of a crystal, a $SiO_2/Al_2O_3$ ratio, a silanol or the like, as disclosed in Patent Literature 1 and 2. In Patent Literature 3, the improvement in thermal stability was achieved only in a CHA-type zeolite derived from a source material containing no organic structure-directing agent and having a low $SiO_2/Al_2O_3$ ratio. In this regard, an object of the present disclosure is to provide at least one of an improvement in the thermal stability of a CHA-type zeolite, which is achieved by a method different from related-art methods for improving thermal stability; a method for producing a CHA-type zeolite having improved thermal stability; and a CHA-type zeolite having improved thermal stability.

Solution to Problem

In the present disclosure, attention was paid to a state of protons at solid acid sites of CHA-type zeolites, in particular, CHA-type zeolites having a $SiO_2/Al_2O_3$ ratio of 8 or greater, and it was discovered that treating CHA-type zeolites under specific conditions improves their thermal stability to a greater extent.

Specifically, the present invention is in accordance with the invention described in the claims, and a summary of the present disclosure is as follows.

[1] A CHA-type zeolite having a $^1$H-MAS-NMR spectrum and an IR spectrum, characterized in that, in the $^1$H-MAS-NMR spectrum, a ratio of an integrated intensity of a maximum peak having a peak top at a chemical shift of 3.0 to 3.5 ppm to an integrated intensity of a maximum peak having a peak top at a chemical shift of 4.0 to 4.5 ppm is greater than 0.12 and 0.5 or less, and, in the IR spectrum, a ratio of a maximum peak height of an absorption peak having a peak top at a wavenumber of 3630 cm[-1] or greater and 3650 cm[-1] or less to a maximum peak height of an absorption peak having a peak top at a wavenumber of 3590 cm[-1] or greater and 3610 cm[-1] or less is 0.40 or greater and 1.0 or less.

[2] The CHA-type zeolite according to [1], characterized in that, in the IR spectrum, the ratio of the maximum peak height of the absorption peak having a peak top at a wavenumber of 3630 cm[-1] or greater and 3650 cm[-1] or less to

the maximum peak height of the absorption peak having a peak top at a wavenumber of 3590 cm$^{-1}$ or greater and 3610 cm$^{-1}$ or less is 0.55 or greater and 1.0 or less.

[3] The CHA-type zeolite according to [1] or [2], wherein, in the $^{1}$H-MAS-NMR spectrum, the ratio of the integrated intensity of the maximum peak having a peak top at a chemical shift of 3.0 to 3.5 ppm to the integrated intensity of the maximum peak having a peak top at a chemical shift of 4.0 to 4.5 ppm is 0.13 or greater and 0.5 or less.

[4] The CHA-type zeolite according to any one of [1] to [3], wherein a molar ratio of silica to alumina is 8.0 or greater and 50.0 or less.

[5] The CHA-type zeolite according to any one of [1] to [4], wherein the CHA-type zeolite contains a transition metal element.

[6] A method for producing a CHA-type zeolite characterized by comprising a step of treating a CHA-type zeolite precursor in a hydration atmosphere, the CHA-type zeolite precursor containing an organic structure-directing agent.

[7] The production method according to [6], wherein the organic structure-directing agent is at least one selected from the group of a N,N,N-trialkyl-adamantaneammonium cation, a N,N,N-trimethyl-benzylammonium cation, a N-alkyl-3-quinuclidinol cation, a N,N,N-trialkyl-exoaminonorbornane cation and a N,N,N-trialkyl-cyclohexylammonium cation.

[8] The production method according to [6] or [7], wherein the CHA-type zeolite precursor has a molar ratio of silica to alumina of 8.0 or greater.

[9] The production method according to any one of [6] to [8], wherein the CHA-type zeolite precursor has a cation type that is a sodium-potassium type.

[10] The production method according to any one of [6] to [9], wherein the CHA-type zeolite precursor has an alkali metal element content of 0.1 mass% or greater.

[11] The production method according to any one of [6] to [10], wherein the hydration atmosphere is an air atmosphere in which an amount of water relative to an amount of saturated water vapor is 5 vol% or greater and 95 vol% or less.

[12] The production method according to any one of [6] to [11], wherein the treating of a CHA-type zeolite precursor in a hydration atmosphere is performed with a treatment in which, after the CHA-type zeolite precursor is placed in a heat-treatment furnace, the heat-treatment furnace is heated to a hydration treatment temperature.

[13] The production method according to any one of [6] to [12], wherein the treating of a CHA-type zeolite precursor in a hydration atmosphere is performed with a treatment in which the CHA-type zeolite precursor is introduced into a heat-treatment furnace preheated to a hydration treatment temperature.

[14] The production method according to any one of [6] to [13], wherein a hydration treatment temperature for the treating of a CHA-type zeolite precursor in a hydration atmosphere is 400°C or greater.

[15] A CHA-type zeolite produced by the production method according to any one of [6] to [14].

[16] The CHA-type zeolite according to [15], characterized in that, in an IR spectrum, a ratio of a maximum peak height of an absorption peak having a peak top at a wavenumber of 3630 cm$^{-1}$ or greater and 3650 cm$^{-1}$ or less to a maximum peak height of an absorption peak having a peak top at a wavenumber of 3590 cm$^{-1}$ or greater and 3610 cm$^{-1}$ or less is 0.55 or greater and 1.0 or less.

[17] A nitrogen oxide reduction catalyst characterized by comprising the CHA-type zeolite according to any one of [1] to [5], [15] and [16].

[18] A method for reducing a nitrogen oxide characterized by comprising using the CHA-type zeolite according to any one of [1] to [5], [15] and [16]. Advantageous Effects of Invention

The present disclosure can provide at least one of a CHA-type zeolite having high thermal stability compared with CHA-type zeolites of the related art; a catalyst containing such a CHA-type zeolite; a nitrogen oxide reduction catalyst; and a nitrogen oxide reduction catalyst that performs selective catalytic reduction.

Description of Embodiments

An example of an embodiment of a CHA-type zeolite of the present disclosure will be presented and described below. Some of the terms used in the present embodiment are as follows.

An "aluminosilicate" is a composite oxide having a structure formed of repeating networks containing aluminum (Al) and silicon (Si) with interposed oxygen (O). Aluminosilicates include crystalline aluminosilicates and amorphous aluminosilicates. Crystalline aluminosilicates are those having a crystalline XRD peak, and amorphous aluminosilicates are those having no crystalline XRD peak, in a powder X-ray diffraction (hereinafter also referred to as "XRD") pattern of the aluminosilicates.

In the present embodiment, the XRD pattern is measured by using CuK$\alpha$ radiation as a radiation source, and the measurement conditions include the following conditions.

Radiation source: CuK$\alpha$ radiation ($\lambda$=1.5406 Å)

Measurement mode: step scanning
Scan speed: 4.0° per minute
Measurement range: 2θ=3.0° to 40.0°

Preferred conditions include the following conditions.

Acceleration current and voltage: 40 mA and 40 kV
Radiation source: CuKα radiation (λ=1.5405 Å)
Measurement mode: step scanning
Scanning condition: 40°/minute
Measurement time: 3 seconds
Measurement range: 2θ=3° to 43°
Vertical divergence limiting slit: 10 mm
Divergence/entrance slit: 1°
Receiving slit: open
Receiving solar slit: 5°
Detector: semiconductor detector (D/teX Ultra)
Filter: Ni filter

The crystalline XRD peak is a peak that is detected by analyzing an XRD pattern with typical analysis software (e.g., SmartLab Studio II, manufactured by Rigaku Corporation) and determining the 2θ of a peak top. The crystalline XRD peak is, for example, an XRD peak having a full width at half maximum of 2θ=0.50° or less.

A "zeolite" is a compound having a regular structure in which framework atoms (hereinafter also referred to as "T atoms") are disposed with interposed oxygen (O), and the T atoms are at least one of the following: metal atoms and/or metalloid atoms. Examples of the metalloid atoms include atoms of at least one selected from the group of boron (B), silicon (Si), germanium (Ge), arsenic (As), antimony (Sb) and tellurium (Te).

A "zeolite-like material" is a compound having a regular structure in which T atoms are disposed with interposed oxygen, and the T atoms include atoms other than at least metal atoms or metalloid atoms. Examples of the zeolite-like material include composite phosphorus compounds in which the T atoms include phosphorus (P), such as aluminophosphate (AlPO) and silicoaluminophosphate (SAPO).

The "regular structure" (hereinafter also referred to as a "zeolite structure") of the zeolite and the zeolite-like material is a framework structure determined according to the structure code specified by the Structure Commission of the International Zeolite Association (hereinafter also referred to simply as a "structure code"). For example, a CHA structure is a framework structure identified as "CHA", which is a structure code. The zeolite structure can be identified by making a comparison against XRD patterns of the structures shown in Collection of Simulated XRD Powder Patterns for Zeolites, Fifth Revised Edition, p. 483 (2007) (hereinafter also referred to as "reference patterns"). Regarding the zeolite structure, the "framework structure", "crystal structure" and "crystalline phase" have the same meaning, as used herein.

In the present embodiment, the expression "...-type zeolite" (e.g., "CHA-type zeolite") means a zeolite having the zeolite structure represented by the structure code and preferably means a crystalline aluminosilicate having the zeolite structure represented by the structure code.

An "IR spectrum" is an IR spectrum of a CHA-type zeolite that contains no organic structure-directing agent and has a cation type that is a proton type. The IR spectrum is measured under the following conditions.

Measurement mode: diffuse reflection mode
Range of measurement wavenumbers: 400 to 4000 $cm^{-1}$
Resolution: 4 $cm^{-1}$
Number of scans: 128
Reference: KBr

The IR spectrum can be measured with a typical FT-IR spectrometer (e.g., Varian 660-IR, manufactured by Agilent Technologies). The obtained IR spectrum can be converted into absorbance values, baseline corrected and analyzed, with a general-purpose spectral data analysis program (e.g., GRAMS/AI, manufactured by Thermo Fisher Scientific).

A "$^1$H-MAS-NMR spectrum" is a $^1$H-MAS-NMR spectrum" of a CHA-type zeolite that contains no organic structure-directing agent and has a cation type that is a proton type. The $^1$H-MAS-NMR spectrum is measured under the following conditions.

Resonant frequency: 400.0 MHz
Pulse width: Π/2
Measurement waiting time: 10 seconds
Number of scans: 32
Rotational frequency: 15 kHz
Chemical shift reference: TMS

The $^1$H-MAS-NMR spectrum can be measured with a typical NMR spectrometer (e.g., VNMRS-400, manufactured by Varian). The obtained NMR spectrum can be baseline corrected and analyzed, with a general-purpose spectral data analysis program (e.g., GRAMS/AI, manufactured by Thermo Fisher Scientific).

An "average crystal size" is an average crystal size based on SEM observation, which is an average of particle sizes of primary particles (primary particle sizes) as measured from an image obtained by scanning electron microscope (SEM) observation. More specifically, the average crystal size is an average of crystal particle sizes determined by measuring a length of a side of a rhombohedral face of a CHA-type zeolite present in a field of view of an SEM observation image, which is an SEM observation image acquired at a magnification sufficient for observing crystal particles that are formed of 150 or more, preferably 200±50, primary particles (for example, the magnification is 5000 to 10000 times).

A method for producing the CHA-type zeolite of the present disclosure will be described below with reference to an example of an embodiment.

The production method of the present embodiment is a method for producing a CHA-type zeolite comprising a step of treating a CHA-type zeolite precursor in a hydration atmosphere, the CHA-type zeolite precursor containing an organic structure-directing agent. In the instance where a CHA-type zeolite that contains an organic structure-directing agent (hereinafter also referred to as an "SDA") is treated in a hydration atmosphere, removal of the SDA and improvement in the thermal stability of the CHA-type zeolite can both be achieved, and, consequently, the CHA-type zeolite produced by the production method of the present embodiment can be a precursor of a nitrogen oxide reduction catalyst having a higher NOx reduction rate.

<Precursor CHA>

The CHA-type zeolite precursor (hereinafter also referred to as a "precursor CHA") to be used in the step (hereinafter also referred to as a "hydration treatment step") of treating a CHA-type zeolite precursor that contains an organic structure-directing agent in a hydration atmosphere is an artificially synthesized CHA-type zeolite (synthetic CHA-type zeolite) and contains an SDA. Such a CHA-type zeolite is sufficient. It is preferable that the precursor CHA be a zeolite in which the framework elements do not include phosphorus.

The SDA included in the precursor CHA is a cation that functions to direct the formation of a CHA-type zeolite (more specifically, a "CHA structure"; the same applies hereinafter). Such an SDA is sufficient. The cation that functions to direct the formation of a CHA-type zeolite may be, for example, at least one selected from the group of a N,N,N-trialkyl-adamantaneammonium cation, a N,N,N-trimethylbenzylammonium cation, a N-alkyl-3-quinuclidinol cation, a N,N,N-trialkyl-exoaminonorbornane cation and a N,N,N-trialkyl-cyclohexylammonium cation. Preferably, the cation is at least one selected from the group of a N,N,N-trialkyl-adamantaneammonium cation (hereinafter also referred to as "TAAd$^+$"), a N,N,N-trimethyl-benzylammonium cation (hereinafter also referred to as "TMBA$^+$") and a N,N,N-trialkyl-cyclohexylammonium cation (hereinafter also referred to as "TACH$^+$"). More preferably, the cation is at least one of TAAd$^+$ and TACH$^+$. Particularly preferably, the cation is TAAd$^+$ and TACH$^+$.

A preferred TAAd$^+$ may be a N,N,N-trimethyl-adamantaneammonium cation (hereinafter also referred to as "TMAd$^+$"). Furthermore, a preferred TACH$^+$ may be at least one of a N,N,N-dimethylethyl-cyclohexylammonium cation (hereinafter also referred to as "CDMEA$^+$") and a N,N,N-methyldiethyl-cyclohexylammonium cation (hereinafter also referred to as "MDECH$^+$") or may be CDMEA$^+$.

Preferably, the precursor CHA contains at least CDMEA$^+$. More preferably, the precursor CHA contains TMAd$^+$ and CDMEA$^+$. Alternatively, the precursor CHA may contain at least one of TMAd$^+$ and CDMEA$^+$.

The fact that the precursor CHA contains an SDA, that is, the precursor CHA is a CHA-type zeolite containing an SDA, can be confirmed with an XRD pattern. Preferably, the precursor CHA has XRD peaks having a peak top at least at lattice spacings d, shown in the table below, in an XRD pattern of the precursor CHA.

[Table 1]

| Lattice spacing d (Å) | Relative intensity* |
| --- | --- |
| 9.16 to 9.36 | 30 to 55 |
| 5.39 to 5.59 | 35 to 60 |

(continued)

| Lattice spacing d (Å) | Relative intensity* |
|---|---|
| 4.86 to 5.06 | 10 to 30 |
| 4.22 to 4.32 | 100 |
| 3.50 to 3.60 | 25 to 50 |
| 2.87 to 2.91 | 40 to 65 |
| 2.84 to 2.88 | 10 to 35 |
| *The relative intensity is a relative value with respect to the intensity at a lattice spacing d of 4.22 to 4.32 Å. | |

The precursor CHA may further have the following XRD peaks, in addition to the XRD peaks mentioned above.

[Table 2]

| Lattice spacing d (Å) | Relative intensity* |
|---|---|
| 6.72 to 6.92 | 5 to 15 |
| 6.20 to 6.40 | 5 to 15 |
| 3.96 to 4.06 | 5 to 15 |
| 3.88 to 3.98 | 5 to 15 |
| 3.78 to 3.87 | 5 to 15 |
| 3.36 to 3.46 | 10 to 25 |
| 2.56 to 2.60 | 5 to 15 |
| 2.46 to 2.50 | 5 to 15 |
| *The relative intensity is a relative value with respect to the intensity at a lattice spacing d of 4.22 to 4.32 Å. | |

Note that the precursor CHA may have any XRD peak that has an intensity (hereinafter also referred to as a "relative intensity") of less than 5 with respect to the intensity of the XRD peak having a peak top at the lattice spacing d of 4.22 to 4.32 Å.

In the precursor CHA, a molar ratio of the SDA to alumina (hereinafter also referred to as an "SDA content") may be greater than 0, 0.1 or greater, 0.3 or greater, 0.6 or greater, 0.7 or greater or 0.8 or greater and 1.0 or less.

In the precursor CHA, it is preferable that a molar ratio of silica to alumina (hereinafter also referred to as a "$SiO_2/Al_2O_3$ ratio") be 8.0 or greater, 10.0 or greater or 12.0 or greater and 30.0 or less, 25.0 or less, 20.0 or less, 19.5 or less or 15.0 or less.

In the present embodiment, the SDA content is a value determined according to the following equation.

$$SDA\ content = 1 - \{(M_1 + 1/n \times M_2)/Al\}\ [mol/mol]$$

In the equation, $M_1$ is a monovalent metal cation, and $M_2$ is an n-valent metal cation. For example, in instances where the precursor CHA contains sodium, potassium and magnesium, the SDA content can be determined by $1 - \{(Na + K + 1/2 \times Mg)/Al\}$ [mol/mol].

In the precursor CHA, it is preferable that the average crystal size be 0.3 $\mu$m or greater or 0.4 $\mu$m or greater and 2.0 $\mu$m or less, 1.5 $\mu$m or less, 1.2 $\mu$m or less, 1.0 $\mu$m or less or 0.8 $\mu$m or less.

A cation type of the precursor CHA may be at least one selected from the group of a sodium type (Na type), a potassium type (K type), a sodium-potassium type (Na-K type), a proton type ($H^+$ type) and an ammonium type ($NH_4^+$ type). It is preferable that the cation type be one in which an alkali metal exchange ratio (a proportion [mol%] of an alkali metal cation [mol] to Al [mol]) be 20% or greater or 30% or greater and 100% or less or 70% or less. For example, such a cation type may be at least one selected from the group of a sodium type, a potassium type and a sodium-potassium type or at least one of a sodium type and a sodium-potassium type or may be a sodium-potassium type. In the instance where the hydration treatment is performed in a state in which an alkali metal has been incorporated, the state of the protons that are present via the oxygen atoms that form the zeolite framework is changed to an extent that the protons can be identified with a measurement, such as an IR measurement. It is believed that the thermal stability of the CHA-type zeolite can be accordingly improved.

In the precursor CHA, it is more preferable that a molar ratio of an alkali metal to aluminum be 0.05 or greater or 0.1 or greater and 1.0 or less, 0.8 or less or 0.5 or less.

It is preferable that the precursor CHA include an alkali metal because, in this case, the thermal stability can be improved more easily by the hydration treatment. A content of the alkali metal element (e.g., sodium and potassium) in the precursor CHA may be 0.1 mass% or greater, greater than 0.5 mass%, 1.0 mass% or greater, 1.5 mass% or greater or 2.0 mass% or greater and 10.0 mass% or less, 8.0 mass% or less or 5.0 mass% or less. The content of the alkali metal is a mass ratio (mass%) of the mass of the alkali metal, which is calculated on an oxide basis, to the total of the mass of the alkali metal, the mass of silicon and the mass of aluminum, in the precursor CHA, which are each calculated on an oxide basis. The content can be determined by $\{M_2O[g]/(SiO_2 + Al_2O_3 + M_2O)[g]\}\times100$.

It is preferable that the precursor CHA not contain phosphorus (P) or fluorine (F). For example, a content of phosphorus and a content of fluorine are each preferably 500 mass-ppm or less or 100 mass-ppm or less, that is, less than or equal to the detection limit (e.g., less than or equal to 100 mass-ppm) of a composition analysis, such as one that uses ICP spectrometry.

<Method for Producing Precursor CHA>

The precursor CHA is a CHA-type zeolite produced by a production method that includes a step of crystallizing a composition containing an SDA. Such a precursor CHA is sufficient. The method for producing a precursor CHA may be a production method that includes a step (hereinafter also referred to as a "crystallization step") of crystallizing a composition that contains a silica source, an alumina source, an alkali source, an organic structure-directing agent and water (hereinafter also referred to as a "source material composition").

The silica source is a compound containing silicon (Si) and may be at least one selected from the group of colloidal silica, precipitated silica, amorphous silica, sodium silicate, tetraethyl orthosilicate and amorphous aluminosilicate. Preferably, the silica source may be amorphous aluminosilicate.

The alumina source is a compound containing aluminum (Al) and may be at least one selected from the group of aluminum sulfate, sodium aluminate, aluminum hydroxide, aluminum chloride and amorphous aluminosilicate. Preferably, the alumina source may be at least one of aluminum hydroxide and amorphous aluminosilicate. Preferably, the alumina source may be amorphous aluminosilicate.

The alkali source is a compound containing an alkali metal element and may be a compound containing at least one selected from the group of sodium, potassium, rubidium and cesium, a compound containing at least one selected from the group of sodium, potassium and cesium, a compound containing at least one of sodium and potassium or a compound containing sodium. The alkali source may, for example, be one that contains one or more of the mentioned alkali metal elements and which is at least one selected from the group of hydroxides, fluorides, bromides, iodides, sulfuric acid salts, nitric acid salts and carbonic acid salts or at least one selected from the group of hydroxides, bromides and iodides or is a hydroxide (hereinafter, an alkali source containing sodium may also be referred to as a "sodium source", and alkali source containing potassium as a "potassium source", for instance). It is particularly preferable that the source material composition contain a sodium source and a potassium source. In instances where a starting material, such as a silica source, contains an alkali metal element, the starting material is also to be regarded as an alkali source.

The water may be purified water and/or ion-exchanged water. In addition, water of constitution, water of hydration and water as a solvent that are present in a starting material are also to be regarded as the water in the source material composition.

The organic structure-directing agent (SDA) is a cation that functions to direct the formation of a CHA-type zeolite (CHA structure), and the cation is one or more of the cations mentioned above. The SDA present in the source material composition is in the form of at least one of a salt and a compound (hereinafter also referred to as an "SDA source"). Such an SDA is sufficient. The SDA source is one that contains one or more of the SDAs mentioned above and which is at least one selected from the group of hydroxides, bromides, iodides, carbonic acid salts, methyl carbonate salts and sulfuric acid salts or preferably at least one selected from the group of hydroxides, bromides and iodides.

A preferred composition of the source material composition includes the following molar composition. In the following molar composition, SDA denotes an organic structure-directing agent, and M denotes an alkali metal element. When the SDA is $TMAd^+$, an $SDA/SiO_2$ ratio can be a "$TMAd^+/SiO_2$ ratio", and when the SDA is $TMAd^+$ and $CDMEA^+$, the $SDA/SiO_2$ ratio can be a "$(TMAd^++CDMEA^+)/SiO_2$ ratio". When M is sodium, an $M/SiO_2$ ratio can be a "$Na/SiO_2$ ratio", and when M is sodium and potassium, the $M/SiO_2$ ratio can be a "$(Na+K)/SiO_2$ ratio".

$SiO_2/Al_2O_3$ ratio = 5.0 or greater or 10.0 or greater and 20.0 or less or 15.0 or less
$SDA/SiO_2$ ratio = 0.06 or greater or 0.07 or greater and 0.12 or less or 0.10 or less

M/SiO$_2$ ratio = 0.10 or greater or 0.15 or greater and 0.30 or less or 0.25 or less
H$_2$O/SiO$_2$ ratio = 8.0 or greater or 10.0 or greater and 25.0 or less or 20.0 or less

The source material composition may include a seed crystal. The seed crystal is a zeolite that functions to promote the crystallization of the CHA-type zeolite and is preferably a CHA-type zeolite. A content of the seed crystal may be 0 mass% or greater or 1 mass% or greater and 10 mass% or less or 5 mass% or less, where the content is the mass of silicon (Si) present in present in the seed crystal calculated on a silica (SiO$_2$) basis, relative to the mass of silicon (Si) present in the source material composition (excluding the seed crystal) calculated on a silica (SiO$_2$) basis.

The crystallization step crystallizes the source material composition to give a CHA-type zeolite (precursor CHA) that is in a state in which an SDA is present. The crystallization may be accomplished by loading the source material composition into a sealable container and hydrothermally treating the source material composition. The conditions for the crystallization are not limited and, for example, may include the following conditions.

Crystallization temperature: 100°C or greater or 140°C or greater and 200°C or less or 170°C or less
Crystallization time: 1 hour or greater or 10 hours or greater and 100 hours or less or 80 hours or less
Crystallization state: at least one of a state of being stirred and a static state, with the state of being stirred being preferable
Crystallization pressure: autogenous pressure

After the crystallization step, the precursor CHA is collected by solid-liquid separation and, if necessary, may be subjected to washing and a treatment for removing water and impurities (e.g., a heat treatment such as drying, which may be, for example, a heat treatment at a temperature of less than 400°C or a heat treatment at a temperature of 300°C or greater and less than 400°C). In other words, the precursor CHA is a CHA-type zeolite that has not been subjected to any heat treatment at a temperature of 400°C or greater after the crystallization. Such a CHA-type zeolite is sufficient.

<Hydration Treatment>

In the hydration treatment step, the precursor CHA is subjected to a treatment in a hydration atmosphere (hereinafter also referred to as a "hydration treatment"). Accordingly, the SDA is removed from the precursor CHA, and the thermal stability of the precursor CHA is improved. A reason that a CHA-type zeolite having improved thermal stability can be produced by the hydration treatment of the precursor CHA can be assumed to be that the CHA-type zeolite prepared by crystallizing the source material composition containing an SDA is heat-treated in an atmosphere in which sufficient water is present. That is, it can be assumed that the SDA exists in a state in which the SDA can compensate charge with the specific aluminum that forms the CHA structure. Accordingly, at sites in which the SDA exists, interaction between the SDA and the water in the atmosphere occurs, and the heat treatment proceeds under a moderate load. Thus, it can be assumed that despite the fact that the heat treatment is performed in a hydration atmosphere, a thermal load on the entire zeolite framework is inhibited, and in addition, thermal stability is improved.

The hydration atmosphere is an atmosphere (in particular, an air atmosphere) in which an amount of water (hereinafter also referred to as a "water content") relative to an amount of saturated water vapor is 5 vol% or greater, 10 vol% or greater, 30 vol% or greater or 50 vol% or greater and 100 vol% or less, 90 vol% or less or 70 vol% or less. It is preferable that the hydration atmosphere be an air atmosphere in which the water content is 15 vol% or greater and 90 vol% or less or an air atmosphere in which the water content is 45 vol% or greater and 80 vol% or less, because in these cases, the CHA-type zeolite resulting from the hydration treatment is likely to have a high amount of solid acid. The water content can be adjusted with a method such as a method that passes a gas mixture of air and water vapor, a method that loads water into a reaction vessel and then performs heating and a method that uses a precursor CHA that is in a hydrated state.

It is preferable that the hydration treatment be performed in a state in which air with a water content as described above is passed. The hydration treatment can be carried out in a known heat-treatment furnace, which may be, for instance, at least one selected from the group of a muffle furnace, a tubular furnace and a kiln.

A hydration treatment temperature may be a temperature of 400°C or greater, 500°C or greater or 550°C or greater and 800°C or less, 650°C or less or 600°C or less. It is particularly preferable that the hydration treatment temperature be 500°C or greater and 700°C or less so as to efficiently remove the SDA while inhibiting the collapse of the CHA structure.

A hydration treatment time depends, for instance, on the hydration treatment temperature and an amount of the precursor CHA used in the hydration treatment. The hydration treatment time may be any length of time sufficient for the SDA to be removed and may be, for example, a time of 10 minutes or greater or 1 hour or greater and 24 hours or less or 5 hours or less. Note that the hydration treatment time is a treatment time at the hydration treatment temperature (maximum temperature reached).

The hydration treatment is a treatment in which the precursor CHA is introduced into a heat-treatment furnace preheated to the hydration treatment temperature or a treatment in which, after the precursor CHA is placed in a heat-treatment furnace, the heat-treatment furnace is heated to the hydration treatment temperature. Either of such treatments is sufficient. A rate at which the heat-treatment furnace is heated to the hydration treatment temperature and a rate at which cooling is carried out after the hydration treatment are not limited. For example, the heating rate and the cooling rate may be 1°C/minute or greater or 2°C/minute or greater and 10°C/minute or less or 5°C/minute or less. The heating rate and the cooling rate may be different from each other.

<Post-treatment Step>

The production method of the present embodiment may include, as necessary, at least one of an ion exchange step and a metal incorporation step, which may be performed after the hydration treatment step.
In the ion exchange step, the CHA-type zeolite is ion-exchanged to have a desired cation type. The cation type may be, for example, at least one of a sodium type (Na type), an ammonium type ($NH_4^+$ type) and a proton type ($H^+$ type) or may be a proton type. The ion exchange can be carried out with any ion exchange method. For example, in instances where the cation type is to be an $NH_4^+$ type, an exemplary method is a method in which a CHA-type zeolite is mixed with an aqueous solution of ammonium chloride and stirred, and in instances where the cation type is to be a $H^+$ type, exemplary methods are a method in which a CHA-type zeolite having a cation type that is an $NH_4^+$ type is heat-treated and a method in which a CHA-type zeolite is mixed with an aqueous solution of hydrochloric acid and stirred.
In the metal incorporation step, the CHA-type zeolite is contacted with a metal compound. Accordingly, a desired metal element that serves as an active metal is incorporated into the CHA-type zeolite. The metal element may be a catalyst metal element, specifically, a transition metal element, and may be at least one selected from the group of platinum, palladium, rhodium, iron, copper, cobalt, manganese and indium, at least one selected from the group of cobalt, nickel, iron and copper or at least one of iron and copper or may be copper. Methods for the metal incorporation are not limited and preferably include a method that enables a metal element to be supported on the CHA-type zeolite. Specifically, the method may be at least one selected from the group of ion exchange, incipient wetness impregnation, evaporation to dryness, precipitation-deposition and physical mixing, preferably at least one of ion exchange and incipient wetness impregnation or more preferably incipient wetness impregnation.
The metal compound is not limited and may be at least one selected from the group of metal nitric acid salts, metal sulfuric acid salts, metal acetic acid salts, metal chlorides, metal complex salts and metal oxides and preferably at least one selected from the group of nitric acid salts, sulfuric acid salts and acetic acid salts.
After the CHA-type zeolite is contacted with a metal compound, the CHA-type zeolite having a metal incorporated therein (hereinafter also referred to as a "metal-incorporated CHA-type zeolite") may be heat-treated if necessary. The conditions for the heat treatment include, for example, air, a temperature of 500°C or greater and 700°C or less and a time of 0.5 hours or greater and 5 hours or less. Note that the "air" refers to an air atmosphere in which the water content is not controlled, and an example of the air is air having a water content of greater than 0 vol% and 3 vol% or less.

<CHA-type zeolite>

A CHA-type zeolite of the present disclosure will be described below with reference to an example of an embodiment.
The CHA-type zeolite of the present embodiment is a CHA-type zeolite having a $^1$H-MAS-NMR spectrum and an IR spectrum in which, in the $^1$H-MAS-NMR spectrum, a ratio of an integrated intensity of a maximum peak having a peak top at a chemical shift of 3.0 to 3.5 ppm to an integrated intensity of a maximum peak having a peak top at a chemical shift of 4.0 to 4.5 ppm is greater than 0.12 and 0.5 or less, and, in the IR spectrum, a ratio of a maximum peak height of an absorption peak having a peak top at a wavenumber of 3630 cm$^{-1}$ or greater and 3650 cm$^{-1}$ or less to a maximum peak height of an absorption peak having a peak top at a wavenumber of 3590 cm$^{-1}$ or greater and 3610 cm$^{-1}$ or less is 0.40 or greater and 1.0 or less.
In the IR spectrum of the CHA-type zeolite of the present embodiment, the ratio (hereinafter also referred to as an "$IR_{P2}/IR_{P1}$ ratio" or an "IR ratio") of the maximum peak height (hereinafter also referred to as "$IR_{P2}$") of the absorption peak having a peak top at a wavenumber of 3630 cm$^{-1}$ or greater and 3650 cm$^{-1}$ or less to the maximum peak height (hereinafter also referred to as "$IR_{P1}$") of the absorption peak having a peak top at a wavenumber of 3590 cm$^{-1}$ or greater and 3610 cm$^{-1}$ or less is 0.4 or greater and 1.0 or less. Preferably, the ratio is 0.45 or greater and 1.0 or less and more preferably 0.55 or greater and 1.0 or less.
The CHA structure includes, in the zeolite structure, oxygen atoms positioned at different atom sites (i.e., nonequivalent oxygen atoms), and the oxygen atoms include an oxygen atom (hereinafter also referred to as "O (1)") that forms a 4-membered oxygen ring structure and an 8-membered oxygen ring structure and is one present at a site that connects two 6-membered oxygen rings that form a double 6-membered oxygen ring, to each other; an oxygen atom (hereinafter also referred to as "O (2)") that forms a 4-membered oxygen ring and an 8-membered oxygen ring and is one present at a site that connects two double 6-membered oxygen rings to each other; an oxygen atom (hereinafter also referred to as "O (3)") that forms a 6-membered ring and is one that also forms a 4-membered oxygen ring and an 8-membered oxygen ring; and an oxygen atom (hereinafter also referred to as "O (4)") that forms a 6-membered ring and is one that forms a 4-membered oxygen ring but does not form any 8-membered oxygen ring.

It can be assumed that $IR_{P1}$ and $IR_{P2}$ are, respectively, the peak height of an IR peak corresponding to a proton present via O (1) and the peak height of an IR peak corresponding to a proton present via O (2). In instances where the above-mentioned IR ratio is satisfied, the framework structure does not easily collapse even if the framework structure is exposed to a high-temperature and high-humidity environment. The IR ratio is preferably 0.58 or greater or 0.60 or greater and 0.80 or less or 0.70 or less.

In the $^1$H-MAS-NMR spectrum of the CHA-type zeolite of the present embodiment, the ratio (hereinafter also referred to as an "$NMR_{P2}/NMR_{P1}$ ratio" or an "NMR ratio") of the integrated intensity (hereinafter also referred to as "$NMR_{P2}$") of the maximum peak having a peak top at a chemical shift of 3.0 to 3.5 ppm to the integrated intensity (hereinafter also referred to as "$NMR_{P1}$") of the maximum peak having a peak top at a chemical shift of 4.0 to 4.5 ppm is greater than 0.12 and 0.5 or less and preferably 0.13 or greater and 0.5 or less. Preferably, the NMR ratio is 0.13 or greater, 0.14 or greater or 0.15 or greater and 0.5 or less, 0.3 or less or 0.2 or less. It can be assumed that $NMR_{P1}$ and $NMR_{P2}$ are, respectively, the integrated intensities of peaks corresponding to protons attached to O (1) and O (3), and $NMR_{P2}$ is an integrated intensity of a peak corresponding to a proton attached to O (2). In instances where the above-mentioned NMR ratio is satisfied, the CHA-type zeolite is likely to have increased thermal stability.

In the CHA-type zeolite of the present embodiment, it is preferable that a molar ratio of silica to alumina (hereinafter also referred to as a "$SiO_2/Al_2O_3$ ratio") be 5.0 or greater, 8.0 or greater or 12.0 or greater and 50.0 or less, less than 30.0, 25.0 or less, 20.0 or less or 15.0 or less.

In the CHA-type zeolite of the present embodiment, it is preferable that the average crystal size be 0.3 µm or greater, 0.4 um or greater or 0.45 um or greater and 2.0 um or less, 1.5 um or less, 1.2 um or less, 1.0 um or less, 0.8 um or less or 0.6 µm or less. It is preferable that the average crystal size be less than 2.0 um, 1.8 um or less or 1.5 um or less, because in these cases, operability (a slurry handling property) is likely to be increased without impairing crystallinity.

In the CHA-type zeolite of the present embodiment, the cation type is not limited and, for example, may be at least one selected from the group of a sodium-potassium type (Na-K type), a proton type (H$^+$ type) and an ammonium type (NH$_4$$^+$ type), at least one selected from the group of a sodium type (Na type), a proton type (H$^+$ type) and an ammonium type (NH$_4$$^+$) or at least one of a proton type and an ammonium type or may be a proton type. The cation type may be a sodium-potassium type.

Preferably, the CHA-type zeolite of the present embodiment contains a catalyst metal element, which may preferably be a transition metal element. The transition metal element is at least one element selected from the group of group 8 elements, group 9 elements, group 10 elements and group 11 elements in the periodic table, at least one selected from the group of platinum (Pt), palladium (Pd), rhodium (Rh), iron (Fe), copper (Cu), cobalt (Co), manganese (Mn) and indium (In), at least one selected from the group of cobalt (Co), nickel (Ni), iron (Fe) and copper (Cu) or at least one of iron and copper, or the transition metal element is copper.

The transition metal element may be incorporated in any form. It is sufficient that the transition metal element be present at a location inside or outside the zeolite framework. For example, the transition metal element may be supported at a location outside the zeolite framework, which may be, for instance, at least one of a pore and an ion exchange site. It is preferable that the transition metal element be incorporated at a location outside the zeolite framework, in particular, be supported on the zeolite.

In the CHA-type zeolite of the present embodiment, a content of the transition metal may be 1.0 mass% or greater, 1.5 mass% or greater or 2.0 mass% or greater and 5.0 mass% or less, 4.5 mass% or less or 4.0 mass% or less. Such a content is sufficient.

EXAMPLES

The present embodiment will now be described with reference to Examples and Comparative Examples. However, the present embodiment is not limited to the examples described below.

(Identification of Crystal)

XRD measurements were performed on samples with a typical powder X-ray diffractometer (instrument name: Ultima IV, manufactured by Rigaku Corporation). The measurement conditions were as follows.

Acceleration current and voltage: 40 mA and 40 kV

Radiation source: CuKα radiation (λ=1.5405 Å)
Measurement mode: step scanning
Scanning condition: 40°/minute
Measurement time: 3 seconds
Measurement range: 2θ=3° to 43°
Vertical divergence limiting slit: 10 mm
Divergence/entrance slit: 1°
Receiving slit: open
Receiving solar slit: 5°
Detector: semiconductor detector (D/teX Ultra)
Filter: Ni filter

The obtained XRD patterns were compared against reference patterns, and the crystal structure of the samples was identified.

(SiO$_2$/Al$_2$O$_3$ Ratio)

The composition of the samples was measured by X-ray fluorescence spectroscopy. The SiO$_2$/Al$_2$O$_3$ ratio was calculated from an X-ray intensity ratio of Si to Al by using a standard curve.

(IR Spectrum)

The IR spectrum of the samples, which were pre-treated under the following conditions, was measured.

<Pre-treatment>

Sample: CHA-type zeolite (cation type: H$^+$ type, SDA: not present)
Treatment atmosphere: vacuum
Treatment temperature: 400°C
Treatment time: 2 hours

The pre-treatment was carried out by performing a treatment at the treatment temperature.

<IR Measurement>

The IR spectrum of the pre-treated samples was measured with a typical FT-IR spectrometer (instrument name: Varian 660-IR, manufactured by Agilent Technologies) while the pre-treatment temperature was maintained. The measurement conditions are shown below.

Measurement mode: diffuse reflection mode
Range of measurement wavenumbers: 400 to 4000 cm$^{-1}$
Resolution: 4 cm$^{-1}$
Number of scans: 128
Reference: KBr

The obtained IR spectra were converted into absorbance values, baseline corrected and analyzed, with a spectral data analysis program (e.g., GRAMS/AI (trade name), manufactured by Thermo Fisher Scientific).

($^1$H-MAS-NMR spectrum)

The $^1$H-MAS-NMR spectrum of the samples, which were pre-treated under the following conditions, was measured.

<Pre-treatment>

Sample: CHA-type zeolite (cation type: H$^+$ type, SDA: not present)
Treatment atmosphere: vacuum
Treatment temperature: 400°C
Treatment time: 5 hours

After the treatment at the treatment temperature, nitrogen was introduced, and the sample was cooled to room temperature in the nitrogen atmosphere. In this manner, the pre-treatment was carried out.

<NMR Measurement>

The $^1$H-MAS-NMR spectrum of the pre-treated samples was measured with a typical NMR spectrometer (instrument name: VNMRS-400, manufactured by Varian). The measurement conditions are shown below.

Resonant frequency: 400.0 MHz
Pulse width: Π/2
Measurement waiting time: 10 seconds
Number of scans: 32
Rotational frequency: 15 kHz
Chemical shift reference: TMS

The obtained NMR spectra were baseline corrected and analyzed, with a spectral data analysis program (e.g., GRAMS/AI (trade name), manufactured by Thermo Fisher Scientific).

(Average Crystal Size)

The average crystal size was determined as follows. In an SEM observation image obtained at an observation magnification of 10,000 times, with a scanning electron microscope (instrument name: JSM-IT200 manufactured by Jeol Ltd.), a length of a side of a rhombohedral face of 150 primary particles of the CHA-type zeolite, which were identified in a field of view of the observation image, was measured to determine a crystal particle, and an average thereof was designated as the average crystal size.

(50%-Volume Particle Size)

1 g of a powder of the sample was mixed with 99 g of purified water to give a slurry, which was used as a measurement sample. The obtained slurry was treated with an ultrasonic homogenizer for 2 minutes to disperse the powder of the sample in the slurry. A 50%-volume particle size of the treated slurry was measured by measuring a volume particle size by laser diffraction light scattering.

Example 1

A 25 mass% aqueous solution of a hydroxide of N,N,N-trimethyl-adamantaneammonium (hereinafter also referred to as "TMADAOH"), a 49 mass% aqueous solution of a bromide of N,N,N-dimethylethyl-cyclohexylammonium (hereinafter also referred to as "CDMEABr"), purified water, a 48 mass% aqueous solution of sodium hydroxide, a 48 mass% aqueous solution of potassium hydroxide and amorphous aluminosilicate were mixed together to give a source material composition having the following composition.

$$SiO_2/Al_2O_3 = 13.0$$

$$(TMAdA^+ + CDMEA^+)/SiO_2 = 0.08$$

$$TMAdA^+/SiO_2 = 0.01$$

$$CDMEA^+/SiO_2 = 0.07$$

$$(Na+K)/SiO_2 = 0.20$$

$$Na/SiO_2 = 0.12$$

K/SiO$_2$ = 0.08

H$_2$O/SiO$_2$ = 15

OH/SiO$_2$ = 0.21

1.0 mass% of a seed crystal was mixed with the source material composition, and subsequently, the source material composition was sealed in a stainless steel autoclave, rotated at 55 rpm and maintained in a state of being stirred at 150°C for 48 hours to be crystallized. The resulting crystallized product was subjected to solid-liquid separation, and the resultant was washed with a sufficient amount of purified water and subsequently dried to remove water and impurities to give a precursor CHA of the present example. The precursor CHA was formed of a single phase of a CHA-type zeolite, had a cation type that was a sodium-potassium type, had a SiO$_2$/Al$_2$O$_3$ of 14.0 and a (Na+K)/Al of 0.56 (4.7 mass%) and had an average crystal size of 0.49 um. Furthermore, the precursor CHA contained TMAda$^+$ and CDMEA$^+$ as SDAs, and the SDA content was 0.44. XRD peaks of the precursor CHA with a relative intensity of 5 or greater are shown in the table below.

[Table 3]

| Lattice spacing d (Å) | Relative intensity* |
|---|---|
| 9.26 | 41 |
| 6.82 | 8 |
| 6.30 | 7 |
| 5.49 | 46 |
| 4.96 | 20 |
| 4.27 | 100 |
| 4.01 | 5 |
| 3.93 | 8 |
| 3.83 | 8 |
| 3.55 | 37 |
| 3.41 | 18 |
| 2.89 | 54 |
| 2.86 | 23 |
| 2.58 | 9 |
| 2.48 | 6 |
| *The relative intensity is a relative value with respect to the intensity at a lattice spacing d of 4.27. | |

The precursor CHA was heated to 550°C at a heating rate of 3°C/minute and subsequently subjected to a hydration treatment at 550°C for 2 hours, in an atmosphere through which a gas mixture (air with a water content of 67 vol%), which was a mixture of dry air (with a water content of 0 vol%) and water vapor, was being passed. Accordingly, a CHA-type zeolite of the present example was prepared. The CHA-type zeolite of the present example was formed of a single phase of a CHA-type zeolite, had a cation type that was a sodium-potassium type, had a SiO$_2$/Al$_2$O$_3$ of 13.9 and had an average crystal size of 0.49 $\mu$m.

The CHA-type zeolite of the present example was treated with a 2 mol/L aqueous solution of hydrochloric acid and thus ion-exchanged, and subsequently, the CHA-type zeolite was dried in air at 110°C overnight. In this manner, the cation type was changed to a proton type. In the ion-exchanged CHA-type zeolite, the IR ratio was 0.62 with IR$_{P1}$ being the intensity of a peak having a peak top at 3599 cm$^{-1}$ and IR$_{P2}$ being the intensity of a peak having a peak top at 3638 cm$^{-1}$. Furthermore, the NMR ratio was 0.15 with NMR$_{P1}$ being the integrated intensity of a peak having a peak top at 4.2 ppm and NMR$_{P2}$ being the integrated intensity of a peak having a peak top at 3.2 ppm.

Example 2

A CHA-type zeolite of the present example was prepared in a manner similar to that of Example 1, except that the hydration treatment of the precursor CHA was performed in an atmosphere through which a gas mixture (air with a water content of 17 vol%), which was a mixture of dry air and water vapor, was being passed. The CHA-type zeolite of the present example was formed of a single phase of a CHA-type zeolite, had a cation type that was a sodium-potassium type, had a $SiO_2/Al_2O_3$ of 13.9 and had an average crystal size of 0.49 um.
In the CHA-type zeolite of the present example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.45 and an NMR ratio of 0.17.

Example 3

A CHA-type zeolite of the present example was prepared in a manner similar to that of Example 1, except that the hydration treatment of the precursor CHA was performed in an atmosphere through which a gas mixture (air with a water content of 89 vol%), which was a mixture of dry air and water vapor, was being passed and that the hydration treatment temperature was 600°C. The CHA-type zeolite of the present example was formed of a single phase of a CHA-type zeolite, had a cation type that was a sodium-potassium type, had a $SiO_2/Al_2O_3$ of 13.9 and had an average crystal size of 0.49 $\mu$m.
In the CHA-type zeolite of the present example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.45 and an NMR ratio of 0.19.

Example 4

A CHA-type zeolite of the present example was prepared in a manner similar to that of Example 1, except that the hydration treatment temperature was 600°C. The CHA-type zeolite of the present example was formed of a single phase of a CHA-type zeolite, had a cation type that was a sodium-potassium type, had a $SiO_2/Al_2O_3$ of 13.9 and had an average crystal size of 0.49 $\mu$m.
In the CHA-type zeolite of the present example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.54 and an NMR ratio of 0.24.

Comparative Example 1

A precursor CHA prepared in a manner similar to that of Example 1 was treated at 600°C for 2 hours with dry air (with a water content of 0 vol%) being passed. Accordingly, a CHA-type zeolite of the present comparative example was prepared.
The CHA-type zeolite of the present comparative example was formed of a single phase of a CHA-type zeolite, had a cation type that was a sodium-potassium type, had a $SiO_2/Al_2O_3$ of 13.8 and had an average crystal size of 0.49 um.
Ion exchange was performed in a manner similar to that of Example 1 to change the cation type to a $H^+$ type (proton type), and the IR measurement and the NMR measurement were performed. In the ion-exchanged CHA-type zeolite, the $IR_{P2}/IR_{P1}$ ratio was 0.51 with $IR_{P1}$ being the intensity of a peak having a peak top at 3599 $cm^{-1}$ and $IR_{P2}$ being the intensity of a peak having a peak top at 3639 $cm^{-1}$. Furthermore, the $NMR_{P2}/NMR_{P1}$ ratio was 0.12 with $NMR_{P1}$ being the integrated intensity of a peak having a peak top at 4.2 ppm and $NMR_{P1}$ being the integrated intensity of a peak having a peak top at 3.2 ppm.

Example 5

A 49 mass% aqueous solution of CDMEABr, a 35 mass% aqueous solution of a hydroxide of N,N,N-dimethylethyl-cyclohexylammonium, purified water, a 48 mass% aqueous solution of sodium hydroxide, a 48 mass% aqueous solution of potassium hydroxide and amorphous aluminosilicate were mixed together to give a source material composition having the following composition.

$$SiO_2/Al_2O_3 = 18.5$$

$$CDMEA^+/SiO_2 = 0.08$$

$(Na+K)/SiO_2 = 0.20$

$Na/SiO_2 = 0.04$

$K/SiO_2 = 0.12$

$H_2O/SiO_2 = 18$

$OH/SiO_2 = 0.18$

1.0 mass% of a seed crystal was mixed, and subsequently, the source material composition was sealed in a stainless steel autoclave, rotated at 55 rpm and maintained in a state of being stirred at 150°C for 48 hours to be crystallized. The resulting crystallized product was subjected to solid-liquid separation, and the resultant was washed with a sufficient amount of purified water and subsequently dried to remove water and impurities to give a precursor CHA of the present example. The precursor CHA was formed of a single phase of a CHA-type zeolite, had a cation type that was a sodium-potassium type, had a $SiO_2/Al_2O_3$ of 18.9 and a $(Na+K)/Al$ of 0.36 (2.6 mass%) and had an average crystal size of 0.78 um. Furthermore, the precursor CHA contained $CDMEA^+$ as an SDA, and the SDA content was 0.64.

The precursor CHA was subjected to a hydration treatment at 600°C for 2 hours in an atmosphere through which a gas mixture (air with a water content of 67 vol%), which was a mixture of dry air (with a water content of 0 vol%) and water vapor, was being passed. Accordingly, a CHA-type zeolite of the present example was prepared. The CHA-type zeolite of the present example was formed of a single phase of a CHA-type zeolite, had a cation type that was a sodium-potassium type, had a $SiO_2/Al_2O_3$ of 18.9 and had an average crystal size of 0.78 $\mu$m.

In the CHA-type zeolite of the present example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.71 and an NMR ratio of 0.38.

Comparative Example 2

A precursor CHA prepared in a manner similar to that of Example 5 was treated at 600°C for 2 hours with dry air (with a water content of 0 vol%) being passed. Accordingly, a CHA-type zeolite of the present comparative example was prepared. The CHA-type zeolite of the present comparative example was formed of a single phase of a CHA-type zeolite, had a cation type that was a sodium-potassium type, had a $SiO_2/Al_2O_3$ of 18.9 and had an average crystal size of 0.78 $\mu$m.

In the CHA-type zeolite of the present comparative example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.24 and an NMR ratio of 0.23.

Example 6

A precursor CHA of the present example was prepared in a manner similar to that of Example 1, except that the composition of the source material composition was the following composition, and the crystallization temperature was 160°C.

$SiO_2/Al_2O_3 = 13.2$

$(TMAdA^+ + CDMEA^+)/SiO_2 = 0.08$

$TMAdA^+/SiO_2 = 0.01$

$CDMEA^+/SiO_2 = 0.07$

$(Na+K)/SiO_2 = 0.20$

$Na/SiO_2 = 0.11$

$K/SiO_2 = 0.09$

$H_2O/SiO_2 = 15$

OH/SiO$_2$ = 0.21

The precursor CHA was formed of a single phase of a CHA-type zeolite, had a cation type that was a sodium-potassium type, had a SiO$_2$/Al$_2$O$_3$ of 13.9 and a (Na+K)/Al of 0.56 (4.7 mass%) and had an average crystal size of 0.58 μm.

The precursor CHA was subjected to a hydration treatment at 550°C for 2 hours in an atmosphere through which a gas mixture (air with a water content of 17 vol%), which was a mixture of dry air (with a water content of 0 vol%) and water vapor, was being passed. Accordingly, a CHA-type zeolite of the present example was prepared.

The CHA-type zeolite of the present example was formed of a single phase of a CHA-type zeolite, had a cation type that was a sodium-potassium type, had a SiO$_2$/Al$_2$O$_3$ of 13.9 and had an average crystal size of 0.58 μm.

In the CHA-type zeolite of the present example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.50 and an NMR ratio of 0.18.

Comparative Example 3

A precursor CHA prepared in a manner similar to that of Example 6 was treated at 600°C for 2 hours with dry air (with a water content of 0 vol%) being passed. Accordingly, a CHA-type zeolite of the present comparative example was prepared.

The CHA-type zeolite of the present comparative example was formed of a single phase of a CHA-type zeolite, had a cation type that was a sodium-potassium type, had a SiO$_2$/Al$_2$O$_3$ of 13.9 and had an average crystal size of 0.58 μm.

In the CHA-type zeolite of the present comparative example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.39 and an NMR ratio of 0.08.

Comparative Example 4

A CHA-type zeolite having a cation type that was a sodium-potassium type was prepared in a manner similar to that of Comparative Example 1 and was used as a precursor CHA. The precursor CHA was subjected to a hydration treatment at 550°C for 2 hours in an atmosphere through which a gas mixture (air with a water content of 17 vol%), which was a mixture of dry air (with a water content of 0 vol%) and water vapor, was being passed. Accordingly, a CHA-type zeolite of the present comparative example was prepared.

The CHA-type zeolite of the present comparative example was formed of a single phase of a CHA-type zeolite, had a cation type that was a sodium-potassium type, had a SiO$_2$/Al$_2$O$_3$ of 13.8 and had an average crystal size of 0.49 μm.

In the CHA-type zeolite of the present comparative example, the cation type was changed to a proton type in a manner similar to that of Example 1. Accordingly, a CHA-type zeolite having a cation type that was a proton type was prepared. The CHA-type zeolite having a cation type that was a proton type had an IR ratio of 0.55 and an NMR ratio of 0.08.

Comparative Example 5

A CHA-type zeolite having a cation type that was a sodium-potassium type was prepared in a manner similar to that of Comparative Example 1, and the CHA-type zeolite was ion-exchanged in a manner similar to that of Example 1. Accordingly, a CHA-type zeolite having a cation type that was a proton type was prepared and used as a precursor CHA. The precursor CHA was subjected to a hydration treatment at 550°C for 2 hours in an atmosphere through which a gas mixture (air with a water content of 17 vol%), which was a mixture of dry air (with a water content of 0 vol%) and water vapor, was being passed. Accordingly, a CHA-type zeolite of the present comparative example was prepared.

The CHA-type zeolite of the present comparative example was formed of a single phase of a CHA-type zeolite, had a cation type that was a proton type, had a SiO$_2$/Al$_2$O$_3$ of 13.8 and had an average crystal size of 0.49 um. In addition, the CHA-type zeolite had an IR ratio of 0.82 and an NMR ratio of 0.06.

Measurement Example 1

The cation type of the CHA-type zeolites prepared in Examples 1 to 5 and Comparative Example 1 was changed to a proton type, and subsequently, an aqueous solution of copper nitrate was added dropwise to each of the CHA-type zeolites, which was subsequently mixed in a mortar for 10 minutes. After the mixing, the CHA-type zeolites were dried in air at 110°C overnight and subsequently heat-treated in air at 550°C for 1 hour. In this manner, metal-incorporated CHA-type zeolites in which copper was supported (copper-supported CHA-type zeolites) were prepared. The results are shown in the table below.

[Table 4]

|  | SiO$_2$/Al$_2$O$_3$ ratio | Cu content (wt%) |
|---|---|---|
| Example 1 | 13.9 | 2.8 |
| Example 2 | 13.9 | 2.8 |
| Example 3 | 13.9 | 2.8 |
| Example 4 | 13.9 | 2.8 |
| Example 5 | 18.9 | 2.8 |
| Comparative Example 1 | 13.8 | 2.8 |
| Comparative Example 2 | 18.9 | 2.8 |

(Hydrothermal Durability Treatment)

The copper-supported CHA-type zeolite was formed and ground into aggregate particles having an aggregate diameter of 12 to 20 mesh. 3 mL of the aggregate particles was loaded into a normal-pressure fixed bed flow reactor (hereinafter also referred to simply as a "reactor") and subsequently subjected to a hydrothermal durability treatment under the following conditions.

Treatment atmosphere: an atmosphere through which air with a water content of 10 vol% was passed
Rate at which air was passed: 300 mL/min
Treatment temperature: 900°C
Treatment time: 1 hour

(Nitrogen Oxide Reduction Rate)

After the hydrothermal durability treatment, 1.5 mL of the aggregate particles was loaded into a reactor, and a nitrogen oxide-containing gas was passed therethrough while the measurement temperature described below was maintained. Concentrations of the nitrogen oxide were measured at the inlet and the outlet of the reactor. The conditions for the passing of the nitrogen oxide-containing gas were as follows.
Composition of nitrogen oxide-containing gas:

| | |
|---|---|
| NO | 200 ppm |
| NH$_3$ | 200 ppm |
| O$_2$ | 10 vol% |
| H$_2$O | 3 vol% |
| N$_2$ | Balance |

Flow rate of nitrogen oxide-containing gas: 1.5 L/min
Space velocity: 60,000 hr$^{-1}$
Measurement temperature: 150°C or 600°C

A nitrogen oxide reduction rate (NOx reduction rate) was determined from the obtained concentrations of the nitrogen oxide, according to the following equation.

$$\text{Nitrogen oxide reduction rate (\%)}$$
$$= \{([NOx]in - [NOx]out)/[NOx]in\} \times 100$$

[NOx]in is the concentration of the nitrogen oxide in the nitrogen oxide-containing gas at the inlet of the reactor, and [NOx]out is the concentration of the nitrogen oxide in the nitrogen oxide-containing gas at the outlet of the reactor.
A ratio of the NOx reduction rate of each of Examples 1 to 4 to the NOx reduction rate of Comparative Example 1 (= NOx reduction rate [%] of each of the Examples/NOx reduction rate [%] of Comparative Example 1) is shown in the table below.

[Table 5]

|  | 150°C | 600°C |
|---|---|---|
| Example 1 | 1.05 | 1.25 |
| Example 2 | 1.10 | 1.02 |
| Example 3 | 1.03 | 1.14 |
| Example 4 | 1.05 | 1.13 |

In the Examples, in which the hydration treatment step of the present embodiment was carried out, it was confirmed that the NOx reduction rate was high for both the low temperature range of 150°C and the high temperature range of 600°C, compared with Comparative Example 1. In particular, in Example 1, the NOx reduction rate at 600°C was 1.25 times higher than that of Comparative Example 1. This demonstrates that the hydration treatment step significantly improves the NOx reduction rate for a high temperature range.

Measurement Example 2

The NOx reduction rate was measured in a manner similar to that of Measurement Example 1, except that the CHA-type zeolite prepared in Example 5 and Comparative Example 2 was used, the hydrothermal durability treatment was performed for 4 hours and the measurement temperature was 600°C, for the measurement of the nitrogen oxide reduction rate. A ratio of the NOx reduction rate of Example 5 to the NOx reduction rate of Comparative Example 2 (= NOx reduction rate [%] of each of the Examples/NOx reduction rate [%] of Comparative Example 2) is shown in the table below.

[Table 6]

|  | 600°C |
|---|---|
| Example 5 | 1.15 |

In Example 5, the NOx reduction rate at 600°C was 1.15 times higher than that of Comparative Example 2. This demonstrates that the hydration treatment step improves the NOx reduction rate for a high temperature range.

Example 7

A precursor CHA was prepared and subjected to a hydration treatment, in a manner similar to that of Example 6. Accordingly, a CHA-type zeolite having a cation type that was a sodium-potassium type was prepared. The prepared CHA-type zeolite was treated with a 2 mol/L aqueous solution of hydrochloric acid and thus ion-exchanged. Subsequently, the CHA-type zeolite was dried in air at 110°C overnight, and thus, a CHA-type zeolite having a cation type that was a proton type was prepared and used as a CHA-type zeolite of the present example. The CHA-type zeolite of the present example had a 50%-volume particle size of 19.8 $\mu$m.

Example 8

A CHA-type zeolite, which was prepared by performing crystallization in a manner similar to that of the production of the precursor CHA of Example 6, was mixed with purified water to form a slurry having a CHA-type zeolite content of 30 mass%. The slurry was continuously wet ground (by bead mill grinding) in a continuous bead mill grinder (device name: Dyno Mill typ KDL, from Shinmaru Enterprises Corporation), under the following conditions.

Grinding media: glass beads with a diameter of 1 mm
Amount of grinding media loaded: 80 vol%
Slurry residence time: 1 minute
Stirring speed (disc peripheral speed): 10 m/s

The ground slurry was subjected to solid-liquid separation, and subsequently, the collected solid phase was dried in air at 110°C overnight. Accordingly, a precursor CHA of the present example was prepared. After the drying, a hydration treatment was performed in a manner similar to that of Example 6, and the prepared CHA-type zeolite was treated with a 2 mol/L aqueous solution of hydrochloric acid and thus ion-exchanged. Subsequently, the CHA-type zeolite was dried in air at 110°C overnight, and thus, a CHA-type zeolite having a cation type that was a proton type was prepared to serve as a CHA-type zeolite of the present example. The CHA-type zeolite of the present example had a 50%-volume particle size of 2.4 $\mu$m.

Example 9

A CHA-type zeolite having a cation type that was a proton type was prepared in a manner similar to that of Example 7. The CHA-type zeolite was ground in a manner similar to that of Example 8. The ground slurry was subjected to solid-liquid separation, and subsequently, the collected solid phase was dried in air at 110°C overnight. Accordingly, a CHA-type zeolite of the present example was prepared. The CHA-type zeolite of the present example had a 50%-volume particle size of 2.9 $\mu$m.

Comparative Example 6

A precursor CHA prepared in a manner similar to that of Example 6 was treated at 600°C for 2 hours with dry air (with a water content of 0 vol%) being passed. Accordingly, a CHA-type zeolite of the present comparative example was prepared.
The CHA-type zeolite of the present comparative example had a $SiO_2/Al_2O_3$ of 14.0 and an average crystal size of 0.50 $\mu$m.
The CHA-type zeolite of the present comparative example was treated with a 2 mol/L aqueous solution of hydrochloric acid and thus ion-exchanged, and subsequently, the CHA-type zeolite was dried in air at 110°C overnight. Accordingly, a CHA-type zeolite having a cation type that was a proton type was prepared. The CHA-type zeolite having a cation type that was a proton type had a 50%-volume particle size of 19.8 $\mu$m.

Comparative Example 7

A precursor CHA prepared in a manner similar to that of Example 8 was treated at 600°C for 2 hours with dry air (with a water content of 0 vol%) being passed. Accordingly, a CHA-type zeolite was prepared. The CHA-type zeolite of the present comparative example had a 50%-volume particle size of 2.4 $\mu$m.
The CHA-type zeolite of the present comparative example was treated with a 2 mol/L aqueous solution of hydrochloric acid and thus ion-exchanged, and subsequently, the CHA-type zeolite was dried in air at 110°C overnight. Accordingly, a CHA-type zeolite having a cation type that was a proton type was prepared.

Measurement Example 3

The NOx reduction rate was measured in a manner similar to that of Measurement Example 1, except that the CHA-type zeolites having a cation type that was a proton type prepared in Examples 7 to 9 and Comparative Examples 6 and 7 were used, and, therefore, the step of changing the cation type of the CHA-type zeolites to a proton type was omitted, and that the measurement temperature for measuring the nitrogen oxide reduction rate was 600°C. A ratio of the NOx reduction rate of each of Examples 7 to 9 and Comparative Example 7 to the NOx reduction rate of Comparative Example 6 (= NOx reduction rate [%] of each of the Examples and the Comparative Example/NOx reduction rate [%] of Comparative Example 6) is shown in the table below.

[Table 7]

|  | 600°C |
|---|---|
| Example 7 | 1.02 |
| Example 8 | 1.02 |
| Example 9 | 1.10 |
| Comparative Example 7 | 0.84 |

In Example 7, the NOx reduction rate at 600°C was 1.02 times higher than that of Comparative Example 6. This demonstrates that the hydration treatment step improves the NOx reduction rate for a high temperature range.

In Comparative Example 7, a grinding process was performed, and as a result, the NOx reduction rate was lower than that of Comparative Example 6. In contrast, in Example 8 and Example 9, in which the hydration treatment was performed, it was demonstrated that the grinding process that was performed did not result in a reduction in the NOx reduction rate.

The entire contents of the specification, claims and abstract of Japanese Patent Application No. 2020-134632, filed on August 7, 2020, are incorporated herein by reference as a disclosure of the specification of the present disclosure.

**Claims**

1. A CHA-type zeolite having a $^1$H-MAS-NMR spectrum and an IR spectrum, wherein

   in the $^1$H-MAS-NMR spectrum, a ratio of an integrated intensity of a maximum peak having a peak top at a chemical shift of 3.0 to 3.5 ppm to an integrated intensity of a maximum peak having a peak top at a chemical shift of 4.0 to 4.5 ppm is greater than 0.12 and 0.5 or less, and
   in the IR spectrum, a ratio of a maximum peak height of an absorption peak having a peak top at a wavenumber of 3630 $cm^{-1}$ or greater and 3650 $cm^{-1}$ or less to a maximum peak height of an absorption peak having a peak top at a wavenumber of 3590 $cm^{-1}$ or greater and 3610 $cm^{-1}$ or less is 0.40 or greater and 1.0 or less.

2. The CHA-type zeolite according to Claim 1, wherein, in the IR spectrum, the ratio of the maximum peak height of the absorption peak having a peak top at a wavenumber of 3630 $cm^{-1}$ or greater and 3650 $cm^{-1}$ or less to the maximum peak height of the absorption peak having a peak top at a wavenumber of 3590 $cm^{-1}$ or greater and 3610 $cm^{-1}$ or less is 0.55 or greater and 1.0 or less.

3. The CHA-type zeolite according to Claim 1 or 2, wherein, in the $^1$H-MAS-NMR spectrum, the ratio of the integrated intensity of the maximum peak having a peak top at a chemical shift of 3.0 to 3.5 ppm to the integrated intensity of the maximum peak having a peak top at a chemical shift of 4.0 to 4.5 ppm is 0.13 or greater and 0.5 or less.

4. The CHA-type zeolite according to any one of Claims 1 to 3, wherein a molar ratio of silica to alumina is 8.0 or greater and 50.0 or less.

5. The CHA-type zeolite according to any one of Claims 1 to 4, wherein the CHA-type zeolite contains a transition metal element.

6. A method for producing a CHA-type zeolite comprising a step of treating a CHA-type zeolite precursor in a hydration atmosphere, the CHA-type zeolite precursor containing an organic structure-directing agent.

7. The method according to Claim 6, wherein the organic structure-directing agent is at least one selected from the group of a N,N,N-trialkyl-adamantaneammonium cation, a N,N,N-trimethyl-benzylammonium cation, a N-alkyl-3-quinuclidinol cation, a N,N,N-trialkyl-exoaminonorbornane cation and a N,N,N-trialkyl-cyclohexylammonium cation.

8. The method according to Claim 6 or 7, wherein the CHA-type zeolite precursor has a molar ratio of silica to alumina of 8.0 or greater.

9. The method according to any one of Claims 6 to 8, wherein the CHA-type zeolite precursor has a cation type that is a sodium-potassium type.

10. The method according to any one of Claims 6 to 9, wherein the CHA-type zeolite precursor has an alkali metal element content of 0.1 mass% or greater.

11. The method according to any one of Claims 6 to 10, wherein the hydration atmosphere is an air atmosphere in which an amount of water relative to an amount of saturated water vapor is 5 vol% or greater and 95 vol% or less.

12. The method according to any one of Claims 6 to 11, wherein the treating of a CHA-type zeolite precursor in a hydration atmosphere is performed with a treatment in which, after the CHA-type zeolite precursor is placed in a heat-treatment furnace, the heat-treatment furnace is heated to a hydration treatment temperature.

13. The method according to any one of Claims 6 to 12, wherein the treating of a CHA-type zeolite precursor in a hydration atmosphere is performed with a treatment in which the CHA-type zeolite precursor is introduced into a heat-treatment furnace preheated to a hydration treatment temperature.

**14.** The method according to any one of Claims 6 to 13, wherein a hydration treatment temperature for the treating of a CHA-type zeolite precursor in a hydration atmosphere is 400°C or greater.

**15.** A CHA-type zeolite produced by the method according to any one of Claims 6 to 14.

**16.** The CHA-type zeolite according to Claim 15, wherein, in the IR spectrum, a ratio of a maximum peak height of an absorption peak having a peak top at a wavenumber of 3630 $cm^{-1}$ or greater and 3650 $cm^{-1}$ or less to a maximum peak height of an absorption peak having a peak top at a wavenumber of 3590 $cm^{-1}$ or greater and 3610 $cm^{-1}$ or less is 0.55 or greater and 1.0 or less.

**17.** A nitrogen oxide reduction catalyst comprising the CHA-type zeolite according to any one of Claims 1 to 5, 15 and 16.

**18.** A method for reducing a nitrogen oxide comprising using the CHA-type zeolite according to any one of Claims 1 to 5, 15 and 16.

## INTERNATIONAL SEARCH REPORT

| International application No. |
|---|
| PCT/JP2021/029284 |

### A. CLASSIFICATION OF SUBJECT MATTER

Int. Cl. C01B39/48(2006.01)i, B01J37/02(2006.01)i, B01J37/10(2006.01)i, B01D53/86(2006.01)i, B01D53/94(2006.01)i, B01J29/76(2006.01)i
FI: C01B39/48, B01J29/76 A, B01J37/02 101Z, B01J37/10, B01D53/86 222, B01D53/94 222, B01D53/86 ZAB

According to International Patent Classification (IPC) or to both national classification and IPC

### B. FIELDS SEARCHED

Minimum documentation searched (classification system followed by classification symbols)
Int. Cl. C01B39/48, B01J37/02, B01J37/10, B01D53/86, B01D53/94, B01J29/76

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2018-183773 A (MITSUBISHI CHEMCAL HOLDINGS CORP.) 22 November 2018 (2018-11-22), claims, paragraphs [0022], [0023], [0024], [0043]-[0051], [0061], [0132] | 1-16<br>17, 18 |
| X<br>Y | JP 2014-65674 A (MITSUBISHI CHEMICAL CORP.) 17 April 2014 (2014-04-17), claims, paragraphs [0020], [0022], [0038]-[0043], [0081]-[0083] | 1-4, 6-16<br>5, 17, 18 |
| X<br>Y | JP 2014-122142 A (MITSUBISHI PLASTICS, INC.) 03 July 2014 (2014-07-03), claims, paragraphs [0094], [0109], [0120] | 1-6, 9-18<br>5, 17, 18 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13.09.2021 | 21.09.2021 |

| Name and mailing address of the ISA/<br>  Japan Patent Office<br>  3-4-3, Kasumigaseki, Chiyoda-ku,<br>  Tokyo 100-8915, Japan | Authorized officer<br><br><br>Telephone No. |
|---|---|

Form PCT/ISA/210 (second sheet) (January 2015)

## INTERNATIONAL SEARCH REPORT
Information on patent family members

| International application No. |
| --- |
| PCT/JP2021/029284 |

| Patent Documents referred to in the Report | Publication Date | Patent Family | Publication Date |
| --- | --- | --- | --- |
| JP 2018-183773 A | 22.11.2018 | (Family: none) | |
| JP 2014-65674 A | 17.04.2014 | (Family: none) | |
| JP 2014-122142 A | 03.07.2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110251048
- JP 2018135261 A
- JP 2017218367 A
- JP 2020134632 A

**Non-patent literature cited in the description**

- Collection of Simulated XRD Powder Patterns for Zeolites. 2007, 483